Europäisches Patentamt

European Patent Office

Office européen des brevets

(19)

(11) Publication number: **0 208 462**

A1

(12) **EUROPEAN PATENT APPLICATION**

(21) Application number: 86304871.6

(22) Date of filing: 24.06.86

(51) Int. Cl.⁴: **A 01 K 61/00**

(30) Priority: 24.06.85 GB 8515921
16.10.85 GB 8525535

(43) Date of publication of application:
14.01.87 Bulletin 87/3

(84) Designated Contracting States:
AT BE CH DE FR GB IT LI LU NL SE

(71) Applicant: C D HOLDINGS LTD
The Pines Broad Street
Guildford Surrey GU3 3BH(GB)

(72) Inventor: Davis, D.I.
Mackies Hill House Mackies Hill
Peaseleg Surrey(GB)

(74) Representative: Jenkins, Richard Gray et al,
R.G.C. Jenkins & Co. 12-15, Fetter Lane
London EC4A 1PL(GB)

(54) Means for protecting fish.

(57) A net for protecting fish in water, the net being adapted to float on or near the water surface.

FIG.1

EP 0 208 462 A1

## MEANS FOR PROTECTING FISH

The present invention relates to means for protecting fish and relates particularly, but not exclusively, to means for protecting fish from birds such as herons.

Presently, a serious problem for the owners of ornamental fish ponds is that herons feed on the fish especially during the winter months. Herons often wade in from the waters edge and one known precaution is to set up trip-wires around and/or across a pond. This precaution has been found to be inadequate as the herons can land instead inside the trip-wires. Another known precaution is to cover the pond with a net which is fastened down around the edge of the pond. The net may prevent herons from taking fish from the pond but spoils the appearance of the pond and also interferes with plants or other structures projecting above the water level.

Marauding birds are also a problem for fish farmers who lose stock to wading birds and to birds which swoop down to steal fish.

According to a first aspect of the present invention there is provided a net for protecting fish in water, characterised in that the net is adapted to float on or near the water surface and comprises a plurality of releasably interconnectable modules.

A net according to the present invention has the advantage that it floats so that there is no need to fasten down the net around the edge of the pond or other area of water in question or to provide separate buoyancy means for keeping the net afloat.

The size of the net can be adapted to suit requirements, for example, to suit the shape of a particular pond. It is envisaged that placing a floating net only around the periphery of the water surface may be all that is needed to keep away wading birds. Therefore, especially where large expanses of water are involved, such as reservoirs, lakes etc. it mat not be necessary completely to cover the water surface in order to protect the fish.

A net according to the present invention provides effective means for protecting fish from marauding birds in such a way as not to spoil the appearance of the area of water. The appearance of the net, in particular the colour, can be chosen according to the environmental conditions in which it is to be used.

Moreover, depending on the size of the apertures in the net, fish can conveniently be fed through the net. Also, the net can be made so as not to prevent light penetrating the water to a great extent.

An important advantage of a modular net according to the present invention is that it can be assembled to suit the shape of a particular stretch of water, such as a pond, and can be arranged around existing plants and other structures. Furthermore, the net in modular form is very versatile in that its overall shape can be modified periodically to suit requirements.

Each module may comprise a generally planar frame. The frames may be polygonal and may, for example, by octagonal.

The net may comprise separate clips for releasably interconnecting neighbouring modules. Conveniently, the clips may be configured as a push fit into apertures in the modules for interconnecting two neighbouring modules.

One or more of the modules may comprise integral fastening means for interconnection with an adjacent module.

It is envisaged that the net may be adapted for receiving, or may be provided with, an infill, which may be a mesh infill.

Furthermore, the net may be provided with means for supporting a floating container eg. a fish food container.

According to another aspect of the present invention there is provided a method of protecting fish in water from marauding birds comprising floating a net on or near the water surface so that the net floats freely. The method may comprise floating a net on or neat only the perimeter of the water surface.

It should be understood that the size of the apertures in a net according to the present invention may be chosen according to requirements. In determining the size of the apertures, regard may be had to the size of the fish to be protected and/or to the particular type of bird which is likely to take the fish, for example, the size of the feet and/or the beak of the bird. Also, the method by which a particular bird is likely to attempt to steal fish would be borne in mind.

The size of the net apertures may range from those present in a fine mesh to a diameter of approximately one foot (0.305 metres) or more. Net apertures of approximately eight inches (0.203 metres) have found to be effective in deterring herons from stealing fish and it is thought that a diameter range of eight inches (0.203 metres) to fifteen inches (0.38 metres) would be feasible for this purpose. In cases where the net comprises apertures adapted to receive an infill or a floating article, the net apertures may be of any required size and may be larger than those mentioned above.

A particular embodiment of the present invention will now be described, by way of example, with reference to the accompanying schematic drawings in which:

Figure 1 is a plan view of part of a modular net according to the present invention;

Figure 2 is a plan view of a module of the net of figure 1;

Figure 3 is a perspective view of a first form of clip for attaching adjacent modules together positioned above; and,

Figure 4 is a perspective view of a second form of clip.

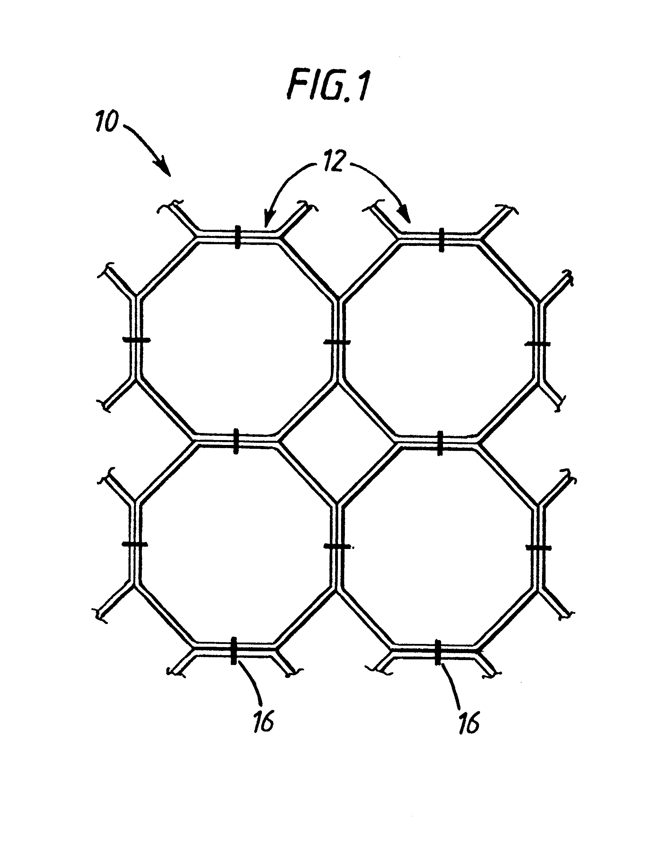

Referring to figures 1-3, a modular net is indicated generally at 10 and comprises a plurality of octagonal modules 12. Each of the modules 12 comprises a planar polypropylene frame which is channel-shaped in cross section and which will float on water and which is generally rigid. Polypropylene material resists corrosion and is impervious to weather conditions.

0208462

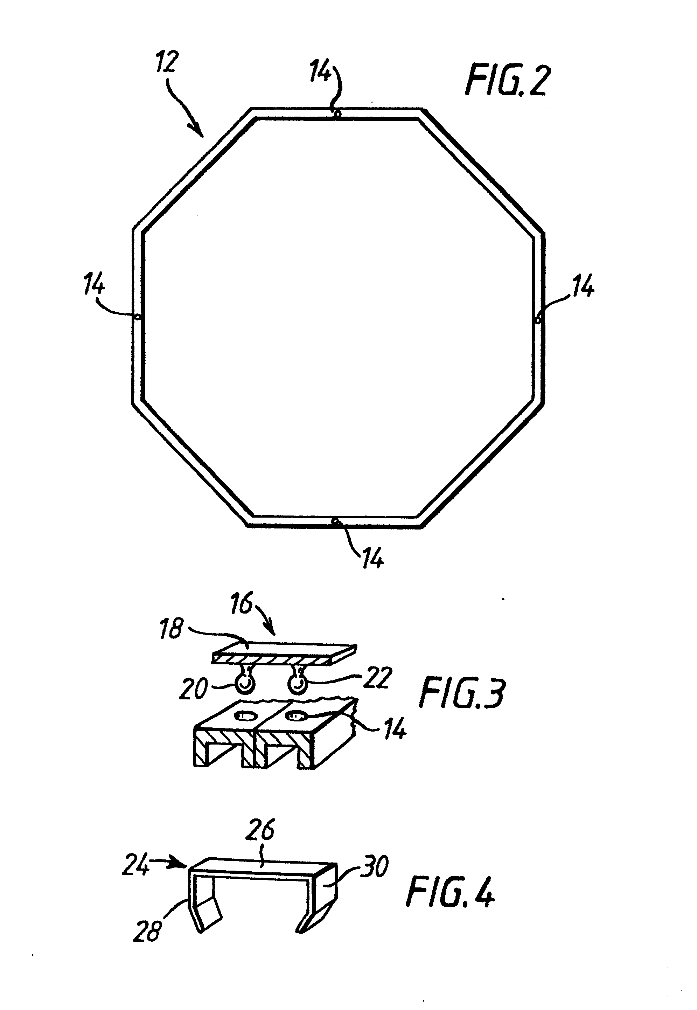

Alternate sides of each module 12 are formed with apertures 14 which enable adjacent modules 12 to be attached together using a clip 16, as shown in figure 3. The clip 16 is made of plastics material and comprises a plate 18 from which depend two similar bulbous protrusions 20 and 22. The protrusions 20 and 22 are a push fit in the apertures 14 of the modules 12 so as releasably to interconnect adjacent the modules.

Figure 4 shows an alternative form of clip 24 which is resilient and made from nylon, comprising a bridging portion 26 and two resilient legs 28 and 30 depending therefrom. To interconnect two adjacent modules 12 the legs 28 and 30 of the clip 24 are flexed outwardly to that the clip 24 can be passed downwardly over the adjacent sides of two of the modules 12. The legs 28 and 30 are then released so that they spring back to their normal position to hold the modules 12 together.

It is also envisaged that the modules may be made from frames formed from tubular plastics material filled with polystyrene.

In use, the modular net 10 is assembled by fastening the modules 12 together using the clips 16 or 24. The modules 12 can be clipped together to form a tessellation of any desired overall configuration to suit the shape of a particular pond and to accommodate plants and other existing structures in the pond. Depending on the size of the pond, the net 10 may be assembled on land and then placed in the pond or may be built up gradually on the pond.

In use, when floating on water, the clips 24 act as hinges to allow the net to bend to accomodate water movement.

The size of the modules 12 may vary and is chosen according to requirements. In the embodiments shown, the overall width of each of the modules 12 is approximately one foot (0.305 metres). The thickness of the walls of each module is approximately $\frac{1}{4}$" (0.635cm).

In practice, the modules 12 may be adapted to receive, or may be provided with, an infill to provide greater protection. The infill may take the form of integral cross-bars on the module so as to divide the module into four areas. Alternatively, the infill may take the form of a finer lattice or a mesh which is either integral with, or is attached to, the module. It is envisaged that the modules may be provided with hooks or other fastening means to which a separate mesh infill may be attached.

One or more of the modules may comprise means for supporting other floating articles, for example, plant pots, fish-food pots etc. For this purpose, some of the modules 12 may be provided with downwardly extending support hooks on which floating pots can rest. Alternatively, the floating pots may simply be shaped so as to nest within one of the modules 12.

When it is desired to remove the net 10 from the pond, the net is simply lifted out and disassembled by disengaging the clips 16 and/or 24 so as to disconnect the modules 12 which can then be wiped clean and stored until needed again.

The net just described is a very open structure in which the material of the net takes up only a small percentage of the overall surface area of the net. Consequently, the net has only a small effect on the amount of light and air reaching the water. The proportion of the total surface area of the net occupied by the material of the net may be between 5% and 20% and is preferably less than 10%.

It should be understood that the modules for forming a modular net according to the present invention may take various forms and, for example, may not all be identical. It is envisaged that one or more of the modules may be formed from a frame defining several polygons. For example, in a modified form, the modular net may comprise unitary modules equivalent to four of the modules 12 described above joined together.

The modules may each simply be cruciform shapes of plastic each provided with means for connection to a neighbouring cruciform module. For example, each cruciform module may be privided at its extremities with two eyelets and two hooks for interengaging other modules to form a square lattice.

It is envisaged that the net, or parts of it, may be electrically heatable to prevent or limit the formation of ice. For example, selected modules of the net may contain a resistance wire and be connected to a source of electrical power by a conduit led across the top of the net.

The net may comprise a unitary lattice. According to this feature, the net may be formed from plastics material produced by fretting, stamping or other suitable method and cut to the required size before use.

In another embodiment, not illustrated, a net according to the present invention is a unitary lattice of polypropylene produced by fretting, stamping or other suitable method. Before use, the net is cut to the size required. It is envisaged that the unitary net may be available, in various widths, on a yardage basis off roll stock. As discussed above in connection with the modular form of net, the net apertures in the unitary version may also be provided with, or adapted to receive, an infill such as a mesh infill and may be adapted to receive other floating objects such as fishfood pots.

The material used for the net is preferably plastics but may be of any kind which adapted to float on water and which can withstand the environmental conditions in which the net is to be used. Composite materials are envisaged. Preferably, the net is made from a material of a desity such that it will float on or near the surface of water.

It should be understood that a net according to the present invention is suitable for use on areas of water of any size. For example, the applications may range from domestic use on ornamental ponds to industrial use by fish farmers and the like on lakes and reservoirs.

CLAIMS:

1. A net (10) for protecting fish in water, characterised in that the net is adapted to float on or near the water surface and comprises a plurality of releasably interconnectable modules (12).

2. A net (10) according to claim 1 wherein each module comprises a generally planar frame.

3. A net (10) according to claim 2 wherein the frames are polygonal.

4. A net (10) according to claim 3 wherein the frames are octagonal.

5. A net (10) according to any preceding claim in which the proportion of the total surface area of the net which is occupied by the material of the net is between 5% and 20%.

6. A net according to claim 5 wherein said proportion is less than 10%.

7. A net (10) according to any preceding claim in which the net apertures are between 8 inches (0.203 metres) and 15 inches (0.38 metres) in diameter.

8. A net (10) according to claim. 7 in which the net apertures are approximately 12 inches (0.305 metres) in diameter.

9. A net (10) according to any preceding claim wherein the modules are releasably connectable by separate clips (16,24).

10. A net (10) according to claim 9 wherein the modules (12) are formed with apertures (14) and the clips (16) are configured to be a push fit into the apertures for interconnecting adjacent modules.

11. A net (10) according to any of claims 1 to 8 wherein one or more of the modules (12) comprises integral fastening means for interconnection with an adjacent module.

12. A net 10) according to any preceding claim which is configured to bend to accommodate water movement when in use.

13. A net (10) according to claim 12 when dependent on claim 9 wherein the clips (24) act as hinges to allow bending of the net.

14. A net (10) according to any preceding claim which is adapted for receiving, or is provided with, an infill.

15. A net (10) according to any preceding claim wherein one or more of the modules is adapted for receiving, or is provided with, an infill.

16. A net (10) according to claim 14 or claim 15 wherein the infill is a mesh infill.

17. A net (10) according to any preceding claim which is provided with means for supporting a floating container.

18. A net (10) according to any preceding claim which is electrically heatable.

19. A net (10) according to any preceding claim wherein selected modules (12) are electrically heatable.

20. A net (10) according to any preceding claim comprising material of a density such that it will float on or near the surface of water.

21. A net (10) according to any preceding claim comprising plastics material.

22. A net (10) according to any preceding claim made of polypropylene.

23. A method of protecting fish in water from marauding birds characterised by floating a net (10) on or near the water surface so that the net floats freely.

24. A method according to claim 23 comprising floating a net (10) on or near only the perimeter of the water surface.

FIG.1

0208462

FIG.2

FIG.3

FIG.4

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int Cl 4) |
|---|---|---|---|
| A | US-A-4 399 770 (KNOWLES)<br><br><br>* Abstract; column 1, line 65 - column 2, line 7; column 2, lines 27-49; claims 1,22-24; figures 1,2 *<br>--- | 1,2,9, 12-15, 17,20, 21,23, 24 | |
| A | FR-A-2 457 637 (ETABLISSEMENTS P. BARNIER)<br>* Claims 1-4; figure 1 *<br>--- | 18,19 | |
| A | CH-A- 270 487 (THOMANN)<br><br>--- | | |
| A | GB-A-1 018 850 (COTTON)<br><br>---<br><br>----- | | TECHNICAL FIELDS SEARCHED (Int Cl 4) |

The present search report has been drawn up for all claims

| Place of search | Date of completion of the search | Examiner |
|---|---|---|
| THE HAGUE | 29-09-1986 | VON ARX V.U. |

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A-2 132 959 (SOCIETE DES USINES CHIMIQUES RHONE-POULENC)<br><br>* Whole document * | 1-3,5, 11,12, 20-22, 24 | A 01 K 61/00 |
| A | --- | 6,23 | |
| Y | GB-A-2 005 588 (TOPPAN PRINTING)<br><br>* Abstract; page 2, lines 33-50; figures 4,4C,5,50; claims 1,8 * | 1-3,5, 11,12, 20-22, 24 | |
| A | --- | 7-10 | |
| Y | LANDTECHNIK, vol. 34, no. 5, May 1979, pages 243-244; J. CANTSTETTER: "Fische aus Hängematten"<br>* Figure 2; page 244, first column, last but one paragraph *<br>--- | 23,24 | TECHNICAL FIELDS SEARCHED (Int Cl 4)<br><br>A 01 K<br>A 01 G |
| Y | FR-A-2 093 141 (SOCIETE DES USINES CHIMIQUES RHONE-POULENC)<br>* Whole document * | 23,24 | |
| A | | 1-3,5, 6,11, 12,20-22 | |
| | --- -/- | | |

The present search report has been drawn up for all claims

| Place of search | Date of completion of the search | Examiner |
|---|---|---|
| THE HAGUE | 29-09-1986 | VON ARX V.U. |